# EUROPÄISCHE PATENTSCHRIFT

(11) **EP 0 382 232 B1**
(45) Veröffentlichungstag und Bekanntmachung des Hinweises auf die Patenterteilung: **14.04.1993**
(21) Anmeldenummer: 90102547.8
(22) Anmeldetag: 08.09.1987
(51) Int. Cl.: B29C 45/17

(54) **Kunststoff-Spritzgiessmaschine mit einem von einem Schwenkarm getragenen zugehörigen Computer und Datensichtgerät**
Plastics injection moulding machine with related computer and display mounted on a pivoting arm
Machine à injecter les plastiques avec ordinateur et écran de visualisation associés montés sur un bras pivotable

(30) Priorität: 24.09.1986 DE 3632449
(43) Veröffentlichungstag der Anmeldung: 16.08.1990
(62) Teilanmeldung aus: 87113069.6
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- FR-A- 2 386 386
- FR-A- 2 561 163
- US-A- 4 758 923
- JAPAN PLASTICS AGE, Band 22, Nr. 198, Juli/August 1984, Seiten 31-35, Tokyo, JP; K. OMORI: "Energy saving and stable precision molding with M-A series injection molding machine"
- WERKSTATT UND BETRIEB, Band 115, Nr. 12, Dezember 1982, Seite 805, München, DE;"Vertikales Bearbeitungszentrum"
- JAPAN PLASTICS AGE, Band 18, Nr. 174 Juli/August 1980, Seiten 28-33, Tokyo, JP; K. NISHIZAWA: "Progress and application of injection process control"

## Beschreibung

Die Erfindung bezieht sich auf eine Spritzgießmaschine entsprechend dem Oberbegriff des Patentanspruches 1.

Bei einer bekannten Spritzgießmaschine dieser Art sind das Datensichtgerät und die Eingabetastaturen in einem gesonderten, im Bedienungspult angeordnet und somit vom Computer der Spritzgießmaschine räumlich getrennt. Dies ist gleichbedeutend mit der Auflösung der üblichen, durch den Schaltschrank mit seinem Datensichtgerät und den Eingabetastaturen bestehenden baulichen Einheit. Die Befreiung des Schaltschrankes von den Eingabetastaturen hat unter anderem den Vorteil, daß der Computer im Schaltschrank hermetisch abgeschlossen werden kann (Multi-Microprozessorsystem mit Farbmonitor, Kunststoffe-Plastics 6/83, Seiten 22 - 24). Bei Bedienung der Eingabetastaturen ist der Blick der bedienenden Person nach unten gerichtet.

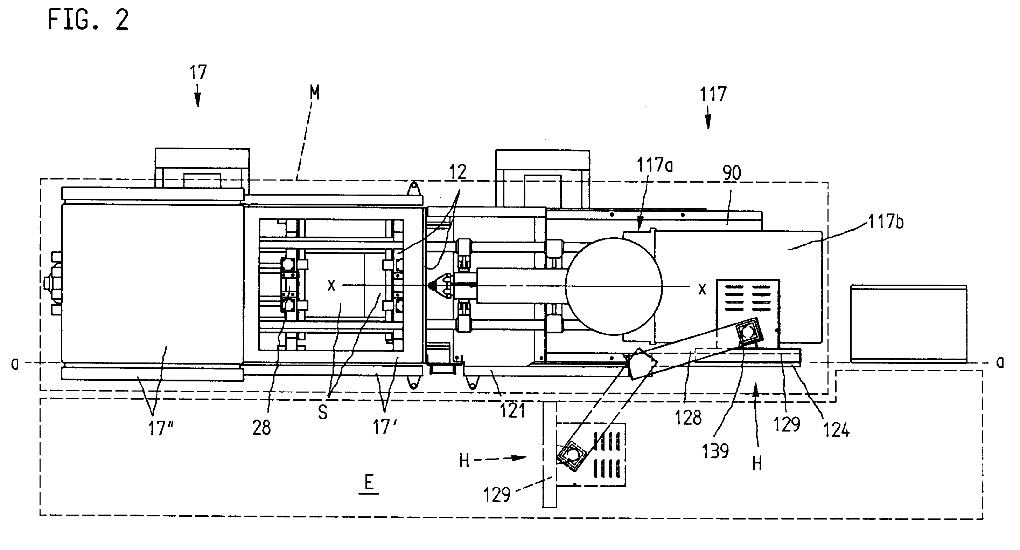

Hiervon ausgehend liegt der Erfindung die Aufgabe zugrunde, eine bekannte Spritzgießmaschine dieser Art in Richtung einer bedienungsfreundlichen Einordnung der Bedienungstastaturen und des Datensichtgerätes in einen Bedienungsplatz weiterzubilden, der im Bedienungsbereich (E in Fig. 2) etwa in Höhe des düsenseitigen Abschnittes des Plastifizierzylinders liegt. Dies soll in der Weise geschehen, daß sich der Bildschirm des Datensichtgerätes und die Eingabetastaturen etwa in einer vertikalen Ebene im nahen Sichtbereich des Bedienungsplatzes befinden und der Bedienungsbereich nach Betriebsende vom Datensichtgerät mit einem Handgriff befreit werden kann.

Diese Aufgabe wird erfindungsgemäß bei einer Spritzgießmaschine der eingangs genannten Art durch die im Kennzeichen des Patentanspruches 1 genannten Merkmale gelöst.

Bei einer solchen Ausbildung liegt der Bildschirm des in Gebrauchsposition befindlichen Datensichtgerätes etwa in einer senkrecht zur Längswand des Maschinenfußes stehenden Ebene und begrenzt den Bedienungsplatz seitlich. Eine solche Position des Bildschirmes ist für die visuelle Kontrolle nahezu optimal. Wesentlich ist ferner, daß sich das Datensichtgerät beim Verschwenken nicht nur um einen Zentriwinkel von etwa 90° dreht, sondern gleichzeitig auch in Richtung der Spritzachse der Spritzgießmaschine in eine beträchtliche Wegstrecke versetzt wird, um in Ruheposition innerhalb der Stellfläche (M) der Spritzgießmaschine in den Bereich der Antriebsaggregate der Spritzgießmaschine an deren Rückseite zu gelangen, über welchen für das Datensichtgerät mit seinem die Elektronik enthaltenden Gehäuse der erforderliche Raum zu Verfügung steht. Bei all dem bemißt sich die Länge des das Datensichtgerät tragenden Schwenkarmes weitgehend nach der Größe, insbesondere der Länge der Spritzgießmaschine, weil bei einer größeren bzw. längeren Spritzgießmaschine der auf die Spritzachse bezogene axiale Abstand zwischen der potentiellen Gebrauchsposition und der potentiellen Ruheposition des Datensichtgerätes und somit dessen Versetzung in Richtung der Spritzachse bei Überführung in die wahlweisen Positionen entsprechend größer oder kleiner ist.

Der Bedienungsbereich kann nach Betriebsende mit Räumgeräten bei relativ geringem Zeitaufwand gesäübert und aufgeräumt werden.

Nachstehend wird die Erfindung anhand der Zeichnung an einem Ausführungsbeispiel erläutert.

Es zeigen:
- Fig. 1-3: die erfindungsgemäße Spritzgießmaschine in Seitenansicht, Draufsicht und Stirnansicht und
- Fig. 4: das am Schwenkarm hängende Datensichtgerät einer Spritzgießmaschine in Vorderansicht in vergrößerter Darstellung.

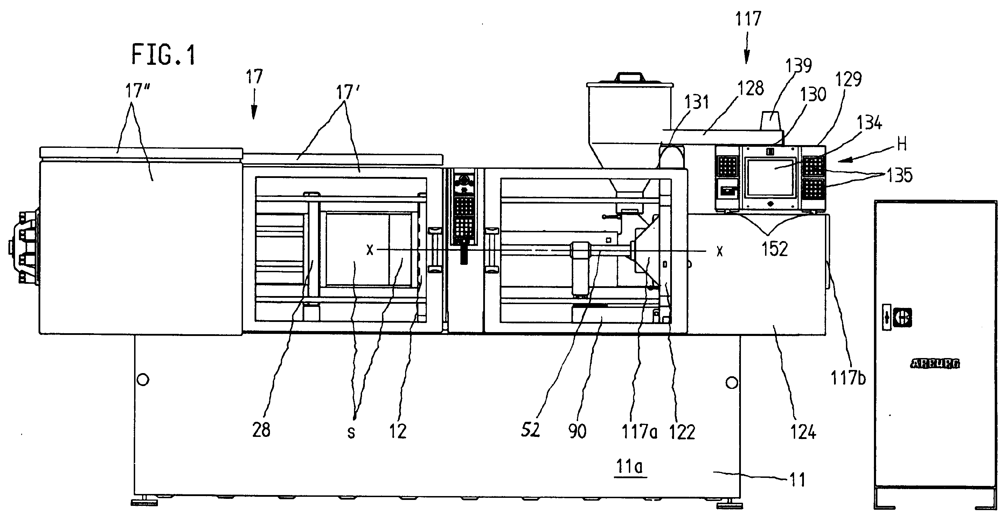

Die Spritzgießmaschine weist eine horizontal schließende Formschließeinheit 17 und eine Spritzgießeinheit 117 auf einem quaderförmigen Maschinenfuß 11 mit rechteckiger Stellfläche M auf. Die Spritzgießeinheit 117 ist bei horizontaler Spritzachse x-x seines Plastifizierzylinders 52 auf die in der Formschließeinheit 17 festspannbare Spritzgießform S auf- bzw. absetzbar und dabei mittels eines Trägerblockes 117a auf stationären horizontalen Säulen geführt. Eine Schutzabdeckung von rechteckigem Querschnitt umschließt die Spritzgießeinheit im Bereich ihrer Antriebsaggregate. Die Antriebseinrichtung für den bewegbaren Formträger 28 ist von stationären Schutzabdeckungen 17˝ abgedeckt, unter welche Schutzschieber 17′ einschiebbar sind, welche die Formschließeinheit 17 im übrigen nämlich bis zum stationären Formträger 12 (Fig. 1,2) abdecken.

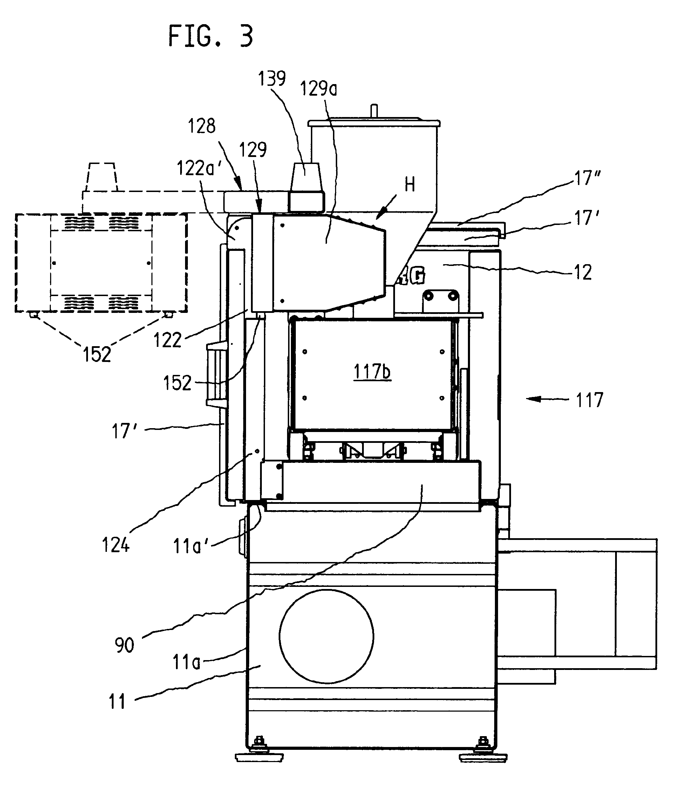

Das Datensichtgerät H ist mittels eines horizontalen Schwenkarmes 128 aus einer in einem Bedienungsbereich E liegenden Gebrauchsposition in eine innerhalb der Stellfläche M der Spritzgießmaschine befindliche Ruheposition einschwenkbar und umgekehrt. Der Schwenkarm 128 ist auf einem als Trägersäule 122 ausgebildeten Träger schwenkbar gelagert, der auf einem in die Horizontale gebogenen oberen Rand der bedienungsseitigen, vertikalen Wand 11a des aus Stahlblech gefertigten quaderförmigen Maschinenfußes abgestützt ist (Fig. 3).

Das Datensichtgerät übergreift in Ruhestellung mit einem die zugehörige Elektronik enthaltenden Gehäuse 129a die horizontale Wand die Schutzabdeckung 117b. Der von seitlichen Eingabetastaturen 135 flankierte Bildschirm 134 des Datensichtgerätes H ist in einem rechteckigen Rahmen 129 angeordnet. Die Höhe dieses Rahmens 129 entspricht etwa der Höhe des Gehäuses 129a. Das Datensichtgerät H ist über ein Drehlager 130 mit dem Schwenkarm 128 verbunden.

Zwischen der oberen Wandung des Gehäuses 129a und dem Drehlager 130 ist eine Schwenkeinrichtung eingefügt, die es ermöglicht, das mittels des Drehlagers 130 drehbare Datensichtgerät H auf einem Achsbolzen 150 begrenzt zu verschwenken, der senkrecht zur vertikalen Drehachse des Drehlagers 130 verläuft. Das Datensichtgerät H ist mittels eines Schwenklagerstückes auf dem Achsbolzen 150 gelagert.

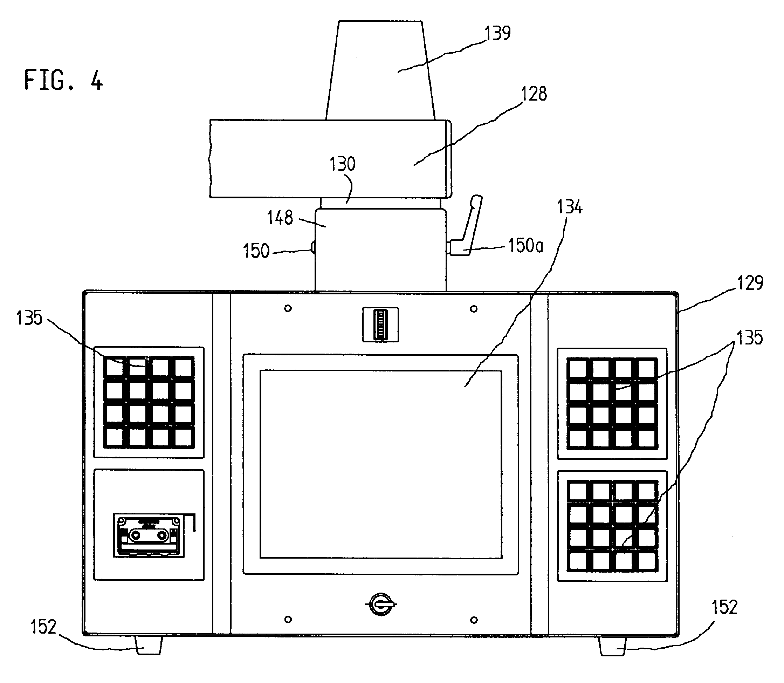

Das Datensichtgerät H ist, wie aus Fig. 4 erkennbar, mittels eines Spannhebels 150a in der jeweiligen Schwenkposition dadurch arretierbar. Eine Signallampe 139 ist koaxial zum Drehlager 130 auf den Schwenkarm 128 aufgesetzt. Die Schenkel des mit Deckblech abgeschlossenen U-Profils der Trägersäule 122 sind mit Podest 90 (Fig. 3) des Maschinenfußes 11 verschraubt.

Die Trägersäule 122 weist einen Endabschnitt 122a′ von größerem Querschnitt auf (Fig. 3). In diesem Endabschnitt 122′ ist das Drehlager 131 für den Schwenkarm 128 angeordnet.

An der Trägersäule 122 ist ein in der Ebene a-a der vertikalen Wand 11a des Maschinenfußes 11 angeordnete Schutzabdeckung 124 befestigt. Diese erstreckt sich bis in die Höhe des in Ruhestellung befindlichen Datensichtgerätes H, das auf dieser Schutzabdeckung 124 abstützbar ist. Zu diesem Zweck liegen am Gehäuse 129a unten angeordnete Gummipuffer 152 auf einem rechtwinklig abgebogenen oberen Rand der Schutzabdeckung 124 auf.

## Patentansprüche

1. Kunststoff-Spritzgießmaschine mit einem eine etwa rechteckige Stellfläche (M) beanspruchenden, etwa quaderförmigen Maschinenfuß (11), auf welchem eine horizontal schließende Formschließeinheit (17) und eine Spritzgießeinheit (117) mit einem den Plastifizierzylinder (52) und die Antriebsaggregate aufnehmenden Trägerblock (117a) angeordnet sind, sowie mit einem vom Computer der Spritzgießmaschine räumlich getrennten Datensichtgerät (H) mit zugehörigen Eingabetastaturen (135), die von dem in einem Bedienungsbereich (E) der Spritzgießmaschine befindlichen Bedienungsplatz zugänglich sind, welcher Bedienungsbereich (E) von einem die Spritzgießform umfassenden Gefahrenbereich (Stellfläche M) durch die bedienungsseitige vertikale Wand (11a) des Maschinenfußes (11) und wenigstens einen auf dieser Wand (11a) angeordneten, vertikalen Schutzschieber (17′) abgegrenzt ist,
dadurch gekennzeichnet, daß auf der bedienungsseitigen Wand (11a) des Maschinenfußes (11) ein Träger (Trägersäule 122) für einen das Datensichtgerät (H) drehbar tragenden Schwenkarm (128) abgestützt ist, daß in einem Endabschnitt (122′) des Trägers (Trägersäule 122) das Drehlager (131) für den Schwenkarm (128) angeordnet ist und daß das Datensichtgerät (H) mittels des Schwenkarmes aus einer im Bedienungsbereich (E) befindlichen Gebrauchsposition in die Stellfläche (M) in eine Ruheposition einschwenkbar ist, in welcher es mit einem die zugehörige Elektronik enthaltenden Gehäuse (129a) Antriebsaggregate der Spritzgießeinheit (117)übergreift.

2. Spritzgießmaschine nach Patentanspruch 1, dadurch gekennzeichnet, daß das Datensichtgerät (H) über ein Drehlager (130) mit senkrechter Achse mit dem Schwenkarm (128) verbunden ist.

3. Spritzgießmaschine nach Patentanspruch 1 oder 2, dadurch gekennzeichnet, daß das Datensichtgerät (H) um einen senkrecht zur Achse des Drehlagers (130) verlaufenden Achsbolzen (150) begrenzt verschwenkbar und in der verschwenkten Stellung arretierbar ist.

## Claims

1. Plastics material injection moulding machine, including a generally block-shaped machine bed (11), which has a generally rectangular support face (M) and on which there are disposed a horizontally closable mould closing unit (17) and an injection moulding unit (117) having a carrier block (117a), which accommodates the plasticising cylinder (52) and the drive aggregates, further including a data display device (H), which is spaced from the computer of the injection moulding machine and has associated input keyboards (135), which are accessible from the service location situated in a service zone (E) of the injection moulding machine, which service zone (E) is separated from a danger zone (support face M), which includes the injection mould assembly, by the vertical wall (11a) at the service end of the machine bed (11) and by at least one vertical protective slide panel (17′) disposed on this wall (11a), characterised in that a carrier (carrier column 122) for a pivotal arm (128), which rotatably carries the data display device (H), is supported on the wall (11a) at the service end of the machine bed (11), in that the rotary bearing (131) for the pivotal arm (128) is disposed in an end portion (122′) of the carrier (carrier column 122), and in that the data display device (H) is pivotable by means of the pivotal arm from a working position, situated in the service zone (E), into a position of rest in the support face (M), said data display device in the position of rest, with a housing (129a) containing the associated electronics, extending over drive aggregates of the injection moulding unit (117).

2. Injection moulding machine according to claim 1, characterised in that the data display device (H) is connected to the pivotal arm (128) via a rotary bearing (130) with a vertical axis.

3. Injection moulding machine according to claim 1 or 2, characterised in that the data display device (H) is pivotable to a limited extent about a pivot pin (150), extending vertically relative to the axis of the rotary bearing (130), and is lockable in the pivoted position.

## Revendications

1. Machine à injecter les matières plastiques, comprenant un socle (11) à peu près parallélépipédique, occupant une aire d'emplacement (M) à peu près rectangulaire, sur lequel sont disposées une unité de fermeture de moule (17) à fermeture horizontale et une unité de moulage par injection (117) possédant un cylindre de plastification (52) et un bloc porteur (117a) recevant les organes d'entraînement, ainsi qu'un appareil de visualisation (H) séparé dans l'espace de l'ordinateur de la machine à injection et auquel sont coordonnés des claviers d'entrée (135), qui sont accessibles depuis le poste de commande, se trouvant dans une zone de commande (E) de la machine à injection, zone (E) qui est délimitée par rapport à une zone de danger (aire d'emplacement M) englobant le moule pour injection, par la paroi verticale (11a) côté commande du socle (11) de la machine et par au moins une protection verticale glissante (17′) disposée sur cette paroi (11a), caractérisée en ce qu'un support (colonne de support 122) pour un bras pivotant (128) portant l'appareil de visualisation (H) rotatif, est appuyé sur la paroi (11a) côté commande du socle (11) de la machine, que le palier de pivotement (131) pour le bras pivotant (128) est disposé dans un segment terminal (122a') du support (colonne de support 122), et que l'on peut faire pivoter l'appareil de visualisation (H) au moyen du bras pivotant d'une position d'utilisation située dans la zone de commande (E) à l'intérieur des limites définies par l'aire d'emplacement (M) à une position de repos dans laquelle cet appareil surplombe, par un boîtier (129a) contenant l'électronique coordonnée, des organes d'entraînement de l'unité de moulage par injection (117).

2. Machine à injection selon la revendication 1, caractérisée en ce que l'appareil de visualisation (H) est relié au bras pivotant (128) par l'intermédiaire d'un palier de pivotement (130) à axe vertical.

3. Machine à injection selon la revendication 1 ou 2, caractérisée en ce que l'appareil de visualisation (H) est inclinable dans une mesure limitée autour d'un axe (150) orienté perpendiculairement à l'axe du palier de pivotement (130) et peut être bloqué à la position inclinée choisie.
